# EUROPÄISCHE PATENTSCHRIFT

(11) **EP 3 530 248 B1**
(45) Veröffentlichungstag und Bekanntmachung des Hinweises auf die Patenterteilung: **07.04.2021**
(21) Anmeldenummer: 19158018.2
(22) Anmeldetag: 19.02.2019
(51) Int. Cl.: A61G 5/10, B60C 23/04

(54) **ROLLSTUHL**
WHEELCHAIR
FAUTEUIL ROULANT

(30) Priorität: 26.02.2018 DE 202018101048 U
(43) Veröffentlichungstag der Anmeldung: 28.08.2019
(73) Patentinhaber: Meyra GmbH, 32689 Kalletal (DE)
(72) Erfinder: Nahrwold, Andreas, 32602 Vlotho (DE)
(74) Vertreter: Wagner, Carsten

(56) Entgegenhaltungen:
- WO-A1-2016/072831
- WO-A1-2016/198970
- JP-A- 2006 062 414
- US-A1- 2017 251 972

## Beschreibung

Die Erfindung betrifft einen Rollstuhl der im Oberbegriff des Anspruchs 1 genannten Art.

Derartige Rollstühle sind allgemein bekannt. Sie weisen einen Rahmen und an dem Rahmen angeordnete Räder auf, die mit einem Reifendruck befüllte Reifen aufweisen.

Entsprechend den jeweiligen Anforderungen können entsprechende Rollstühle als manuell betriebene Rollstühle oder als Elektro-Rollstühle ausgebildet sein.

Durch JP 2006 062414 A ist ein Rollstuhl mit den Merkmalen des Oberbegriffs des Anspruchs 1 bekannt.

Reifendruckkontrollsysteme sind auch durch US 2017/251972 A1, WO 2016/072831 A1 und WO 2016/198970 A1 bekannt.

Der Erfindung liegt die Aufgabe zu Grunde, einen Rollstuhl der im Oberbegriff des Anspruchs 1 genannten Art anzugeben, dessen Betriebssicherheit verbessert ist.

Diese Aufgabe wird durch die im Anspruch 1 angegebene Erfindung gelöst.

Die Erfindung geht von der Erkenntnis aus, dass auch bei einem Rollstuhl die Betriebsicherheit davon abhängt, dass die Reifen mit einem passenden Reifendruck befüllt sind. Der Erfindung liegt hiervon ausgehend der Gedanke zu Grunde, die Betriebssicherheit des Rollstuhls dadurch zu verbessern, dass der Reifendruck automatisch kontrolliert wird. Zu diesem Zweck sieht die Erfindung vor, dass der Rollstuhl ein Reifendrucckontrollsystem aufweist.

Auf diese Weise kann während des Betriebs des Rollstuhls ständig geprüft bzw. überwacht werden, dass die Reifen des Rollstuhls mit einem passenden Reifendruck befüllt sind. Dadurch sind Betriebstörungen, die von einem zu geringen Reifendruck herrühren, ebenso vermieden wie Komforteinbußen, die von einem zu hohen Reifendruck herrühren.

Auf diese Weise sind sowohl die Betriebssicherheit des Rollstuhls als auch der Komfort für den Benutzer des Rollstuhls verbessert.

Entsprechend den jeweiligen Anforderungen kann das erfindungsgemäß vorgesehene Reifendruckkontrollsystem in vielfältiger Weise ausgestaltet sein. Eine vorteilhafte Weiterbildung der Erfindung sieht insoweit vor, dass das Reifendruckkontrollsystem den Reifen zugeordnete Sensormodule aufweist, die mit einer Zentraleinheit in Signalübertragungsverbindung stehen zum Übertragen von den jeweiligen Reifendruck repräsentierenden Signalen. Entsprechende Reifendruckkontrollsysteme stehen als relativ einfache und kostengünstige Standardbaugruppen zur Verfügung und weisen eine hohe Zuverlässigkeit auf. Ein erfindungsgemäßer Rollstuhl mit Reifendruckkontrollsystem ist nur geringfügig teurer in der Herstellung als ein herkömmlicher Rollstuhl ohne Reifendruckkontrollsystem bei gleichzeitig verbesserter Betriebssicherheit und verbessertem Komfort.

Eine andere vorteilhafte Weiterbildung der Erfindung sieht vor, dass das Reifendruckkontrollsystem eine Anzeigeeinrichtung aufweist oder mit einer Anzeigeeinrichtung verbunden ist zur Anzeige von reifendruckbezogenen Daten. Anhand der angezeigten reifendruckbezogenen Daten kann sich ein Benutzer des Rollstuhls bei Bedarf darüber informieren, welcher Reifendruck in den Reifen vorliegt. Bei Bedarf kann der Benutzer des Rollstuhls dann den Reifendruck ggf. anpassen oder anpassen lassen.

Eine andere vorteilhafte Weiterbildung der Erfindung sieht vor, dass das Reifendruckkontrollsystem eine Signalerzeugungseinrichtung aufweist oder mit einer Signalerzeugungseinrichtung in Datenübertragungsverbindung steht, die derart ausgebildet und programmiert ist, dass beim Erreichen eines eingestellten oder einstellbaren Grenzwertes des Reifendrucks ein Warnsignal erzeugt wird. Bei dem Warnsignal kann es sich um ein akustisches oder optisches Signal handeln, das einem Benutzer des Rollstuhls angezeigt, dass sich der Reifendruck nicht in dem vorbestimmten Bereich befindet.

Die Zentraleinheit des Reifendruckkontrollsystems sowie die Anzeigeeinrichtung und die Signalerzeugungseinrichtung können als Hardware-Baugruppen an dem Rollstuhl vorgesehen sein. Eine außerordentlich vorteilhafte Weiterbildung der Erfindung sieht insoweit vor, dass die Anzeigeeinrichtung und/oder die Signalerzeugungseinrichtung durch ein mobiles Telekommunikationsendgerät gebildet sind bzw. ist, dass mit der Zentraleinheit des Reifendruckkontrollsystems in Datenübertragungsverbindung steht. Auf diese Weise kann die Hardware eines von einem Benutzer des Rollstuhls ohnehin mitgeführten Telekommunikationsendgeräts, beispielsweise eines Smartphones, verwendet werden, um die entsprechenden Funktionen des Reifendruckkontrollsystems auszuführen. Auf diese Weise ist die Implementierung eines entsprechenden Reifendruckkontrollsystems an einem Rollstuhl weiter vereinfacht. Außerdem ist auch die Bedienung vereinfacht, indem der Benutzer Anzeigen oder Signale des Reifendruckkontrollsystems beispielsweise über sein Smartphone erhält.

Eine andere vorteilhafte Weiterbildung der Erfindung sieht vor, dass wenigstens ein Sensormodul des Reifendruckkontrollsystems auf ein Ventil eines Reifens aufschraubbar ist.

Eine vorteilhafte Weiterbildung der vorgenannten Ausführungsform sieht vor, dass wenigstens ein Sensormodul drahtlos mit der Zentraleinheit des Reifendruckkontrollsystems in Signalübertragungsverbindung steht.

Der erfindungsgemäße Rollstuhl ist als Elektro-Rollstuhl ausgebildet :

Die Erfindung wird nachfolgend anhand eines Ausführungsbeispiels unter Bezugnahme auf die beigefügte schematisierte Zeichnung näher erläutert.

Es zeigt:
- Fig. 1: eine Perspektivansicht eines Teiles eines erfindungsgemäßen Rollstuhles im Bereich der Reifen,
- Fig. 2: ein stark schematisiertes Blockschaltbild eines erfindungsgemäßen Rollstuhles und
- Fig. 3: in gleicher Darstellung wie Fig. 1, jedoch in gegenüber Fig. 1 vergrößertem Maßstab einen Reifen des Rollstuhls gemäß Fig. 1.

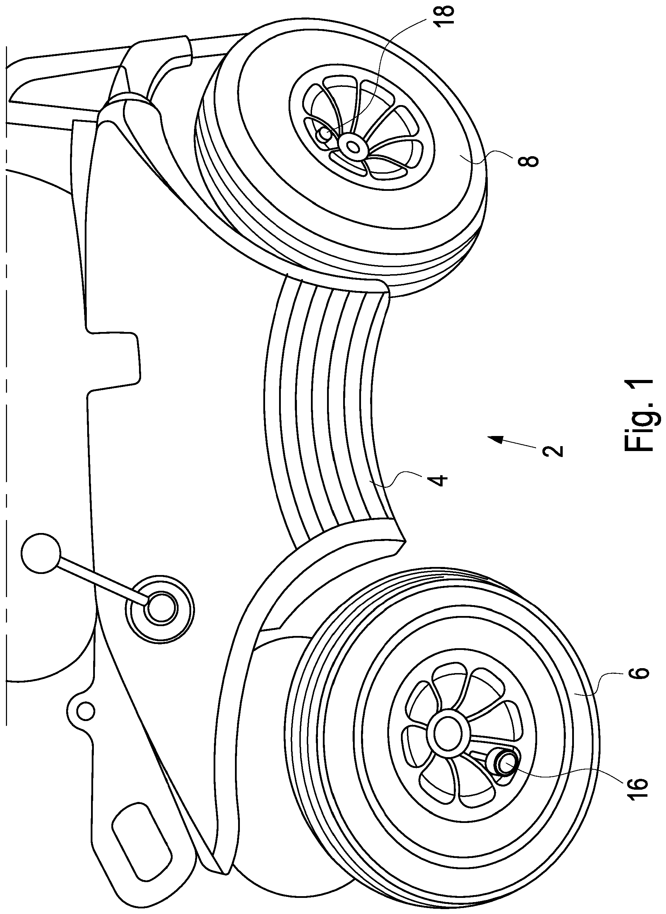

Unter Bezugnahme auf Fig. 1 bis Fig. 3 wird nachfolgend ein Ausführungsbeispiel eines erfindungsgemäßen Rollstuhles in Form eines Elektro-Rollstuhles näher erläutert.

In Fig. 1 ist in einer Perspektivansicht ein Teil eines erfindungsgemäßen Rollstuhles 2 in Form eines Elektro-Rollstuhles dargestellt, der einen als Fahrgestell ausgebildeten Grundkörper 4 aufweist, an dem Räder mit Reifen 6, 8, 10, 12 angeordnet sind, von denen in Fig. 1 lediglich drei Reifen 6, 8, 10 erkennbar sind.

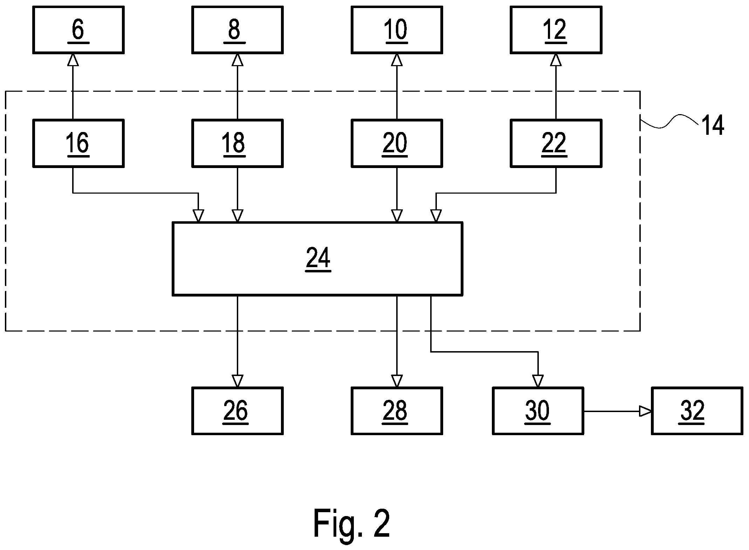

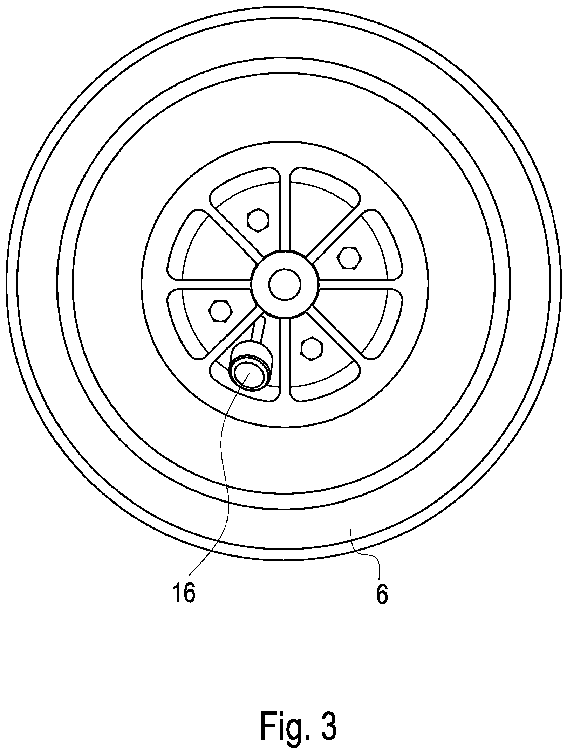

Erfindungsgemäß weist der Rollstuhl 2 ein Reifendruckkontrollsystem 14 auf (vgl. Fig. 2), das den Reifen 6, 8, 10, 12 zugeordnete Sensormodule 16, 18, 20, 22 aufweist, die jeweils auf ein Ventil des zugeordneten Reifens 6, 8, 10, 12 aufgeschraubt sind (vgl. Fig. 1 in Bezug auf die Reifen 6, 8 und die Sensormodule 16, 18 sowie Fig. 3 in Bezug auf den Reifen 6 und das Sensormodul 16).

Die Sensormodule 16, 18, 20, 22 stehen drahtlos, nämlich per Funk, mit einer Zentraleinheit 24 des Reifendruckkontrollsystems 14 in Datenübertragungsverbindung und übermitteln der Zentraleinheit 24 fortlaufend den Reifendruck des jeweiligen Reifens 6 bzw. 8 bzw. 10 bzw. 12 repräsentierende Daten.

Der Reifendruck kann permanent oder auf Anforderung des Benutzers des Rollstuhls 2 auf einer Anzeigeeinrichtung 26 angezeigt werden. Beim Erreichen eines vorgegebenen Grenzwertes des Reifendrucks kann mittels einer Signalerzeugungseinrichtung 28 ein Signal erzeugt werden, das dem Benutzer des Rollstuhls 2 angezeigt, dass sich der Reifendruck eines oder mehrerer Reifen 6, 8, 10, 12 außerhalb des vorgegebenen Bereiches befindet, so dass der Benutzer den Reifendruck des betreffenden Reifens bzw. der betreffenden Reifen anpassen bzw. anpassen lassen kann.

Die Anzeigeeinrichtung 26 und/oder die Signalerzeugungseinrichtung 28 können bzw. kann durch ein von dem Benutzer des Rollstuhls 2 mitgeführtes Telekommunikationsendgerät, beispielsweise Smartphone, gebildet sein, das beispielsweise über Funk mit der Zentraleinheit 24 des Reifendruckkontrollsystems 14 in Datenübertragungsverbindung steht. Es ist auch möglich, dass die Zentraleinheit 24 des Reifendruckkontrollsystems 14 durch die Hardware des Telekommunikationsendgeräts gebildet ist, mit dem die Sensormodule 16, 18, 20, 22 in Datenübertragungsverbindung stehen.

Bei dem dargestellten Ausführungsbeispiel steht das Reifendruckkontrollsystem 14 mit einer Steuerungseinrichtung 30 zur Ansteuerung eines Fahrantriebs 32 des Rollstuhles 2 derart in Signalübertragungsverbindung (vgl. Fig. 2), dass der Fahrantrieb 32 in Abhängigkeit von Ausgangssignalen des Reifendrucckontrollsystems 14 ansteuerbar ist oder angesteuert wird. Bei dem Fahrantrieb kann es sich um einen elektromotorischen Antrieb eines Elektro-Rollstuhles oder auch um einen elektromotorischen Hilfsantrieb eines manuell antreibbaren Rollstuhles, beispielsweise Greifreifenrollstuhles, handeln.

Dabei kann das Reifendruckkontrollsystem 14 beispielsweise und insbesondere so mit der Steuerungseinrichtung 30 des Fahrantriebs 32 zusammenwirken, dass die Antriebsleistung des Fahrantriebs 32 in Abhängigkeit von dem jeweils festgestellten Reifendruck beeinflusst wird, beispielsweise derart, dass beim Unterschreiten eines eingestellten oder einstellbaren Reifendrucks die Leistung des Antriebs und damit die Höchstgeschwindigkeit des Rollstuhles beschränkt wird. Auf diese Weise ist die Betriebssicherheit des Rollstuhles wesentlich erhöht.

Falls es sich bei dem Fahrantrieb 32 um einen elektromotorischen Hilfsantrieb eines manuell antreibbaren Rollstuhles, beispielsweise Greifreifenrollstuhles, handelt, bei dem jedem Antriebsrad des Rollstuhles eine Antriebseinheit des Hilfsantriebs zugeordnet ist, so kann das Reifendruckkontrollsystem derart mit der Steuerungseinrichtung 30 zusammenwirken, dass in Abhängigkeit von dem durch das Reifendruckkontrollsystem festgestellten Reifendruck die Antriebseinheiten abweichend voneinander angesteuert werden. Würde beispielsweise ein Druckverlust in dem Reifen eines Antriebsrades dazu führen, dass der Rollstuhl von einer durch den Benutzer vorgegebenen Geradeausfahrt abweicht, so können die Antriebseinheiten des Hilfsantriebs durch die Steuerungseinrichtung in Abhängigkeit von den Ausgangssignalen des Reifendruckkontrollsystems unabhängig voneinander so angesteuert werden, dass die Abweichung von der Geradeausfahrt kompensiert wird und der Rollstuhl in der von dem Benutzer vorgegebenen Weise geradeaus fährt.

Dadurch, dass durch das Reifendruckkontrollsystem 14 fortlaufend der Reifendruck in den Reifen 6, 8, 10, 12 kontrolliert wird, sind Betriebstörungen des Rollstuhls oder Komforteinbußen aufgrund eines nicht passenden Reifendrucks vermieden.

## Patentansprüche

1. Rollstuhl (2),
mit einem Grundkörper (4) und
mit an dem Grundkörper (4) angeordneten Rädern, die mit einem Reifendruck befüllte Reifen (6, 8, 10, 12) aufweisen,
wobei der Rollstuhl ein Reifendruckkontrollsystem (14) aufweist,
**dadurch gekennzeichnet,**
**dass** das Reifendruckkontrollsystem (14) mit einer Steuerungseinrichtung (30) zur Ansteuerung eines Fahrantriebs (32) des Rollstuhles derart in Signalübertragungsverbindung steht, dass der Fahrantrieb (32) in Abhängigkeit von Ausgangssignalen des Reifendruckkontrollsystems (14) ansteuerbar ist oder angesteuert wird.

2. Rollstuhl nach Anspruch 1, **dadurch gekennzeichnet, dass** das Reifendruckkontrollsystem (14) den Reifen (6, 8, 10, 12) zugeordnete Sensormodule (16, 18, 20, 22) aufweist, die mit einer Zentraleinheit (24) des Reifendruckkontrollsystems (14) in Signalübertragungsverbindung stehen zum Übertragen von den jeweiligen Reifendruck repräsentierenden Signalen zu der Zentraleinheit (24).

3. Rollstuhl nach Anspruch 1 oder 2, **dadurch gekennzeichnet, dass** das Reifendruckkontrollsystem (14) eine Anzeigeeinrichtung (26) aufweist oder mit einer Anzeigeeinrichtung verbunden ist zur Anzeige von reifendruckbezogenen Daten.

4. Rollstuhl nach einem der vorhergehenden Ansprüche, **dadurch gekennzeichnet, dass** das Reifendruckkontrollsystem (14) eine Signalerzeugungseinrichtung (28) aufweist oder mit einer Signalerzeugungseinrichtung in Datenübertragungsverbindung steht, die derart ausgebildet und programmiert ist, dass beim Erreichen eines eingestellten oder einstellbaren Grenzwerts des Reifendrucks ein Warnsignal erzeugt wird.

5. Rollstuhl nach Anspruch 3 oder 4, **dadurch gekennzeichnet, dass** die Anzeigeeinrichtung (26) und/oder die Signalerzeugungseinrichtung (28) durch ein mobiles Telekommunikationsendgerät gebildet sind bzw. ist, das mit der Zentraleinheit (24) des Reifendruckkontrollsystems (14) in Datenübertragungsverbindung steht.

6. Rollstuhl nach einem der vorhergehenden Ansprüche, **dadurch gekennzeichnet, dass** wenigstens ein Sensormodul (16, 18, 20, 22) auf ein Ventil eines zugeordneten Reifens (6, 8, 10, 12) aufschraubbar ist.

7. Rollstuhl nach einem der vorhergehenden Ansprüche, **dadurch gekennzeichnet, dass** wenigstens ein Sensormodul (16, 18, 20, 22) drahtlos mit der Zentraleinheit (24) des Reifendruckkontrollsystems (14) in Signalübertragungsverbindung steht.

8. Rollstuhl nach einem der vorhergehenden Ansprüche, **dadurch gekennzeichnet, dass** der Rollstuhl (2) als Elektro-Rollstuhl ausgebildet ist.

## Claims

1. Wheelchair (2), with a main body (4) and with wheels arranged on the main body (4), which have tyres (6, 8, 10, 12) filled with tyre pressure, wherein the wheelchair has a tyre pressure control system (14),
**characterised in that**
the tyre pressure control system (14) is in signal-transmission connection with a control device (30) for controlling a drive (32) of the wheelchair such that the drive (32) can be controlled or is controlled as a function of output signals of the tyre pressure control system (14).

2. Wheelchair according to claim 1, **characterised in that** the tyre pressure control system (14) comprises sensor modules (16, 18, 20, 22) assigned to the tyres (6, 8, 10, 12), which sensor modules are in signal-transmission connection with a central unit (24) of the tyre pressure control system (14) for transmitting signals representing the respective tyre pressure to the central unit (24).

3. Wheelchair according to claim 1 or 2, **characterised in that** the tyre pressure control system (14) comprises a display device (26) or is connected to a display device for displaying data relating to tyre pressure.

4. Wheelchair according to any of the preceding claims, **characterised in that** the tyre pressure control system (14) has a signal generating device (28) or is in data-transmission connection with a signal generating device, which is configured and programmed such that a warning signal is generated when a set or settable threshold valve of the tyre pressure is reached.

5. Wheelchair according to claim 3 or 4, **characterised in that** the display device (26) and/or the signal generating device (28) is/are formed by a mobile telecommunications terminal, which is in data-transmission connection with the central unit (24) of the tyre pressure control system (14).

6. Wheelchair according to any of the preceding claims, **characterised in that** at least one sensor module (16, 18, 20, 22) can be screwed onto a valve of an assigned tyre (6, 8, 10, 12).

7. Wheelchair according to any of the preceding claims, **characterised in that** at least one sensor module (16, 18, 20, 22) is in signal-transmission connection wirelessly with the central unit (24) of the tyre pressure control system (14).

8. Wheelchair according to any of the preceding claims, **characterised in that** the wheelchair (2) is designed as an electric wheelchair.

## Revendications

1. Fauteuil roulant (2)
avec un corps de base (4) et
avec des bords disposés sur le corps de base (4), qui comprennent des pneus (6, 8, 10, 12) remplis d'une pression de pneus,
dans lequel le fauteuil roulant comprend un système de contrôle de la pression des pneus (14),
**caractérisé en ce que**
le système de contrôle de la pression des pneus (14) est en liaison par transmission de signaux avec un dispositif de commande (30) pour le contrôle d'un entraînement (32) du fauteuil roulant de façon à ce que l'entraînement (32) puisse être contrôlé ou soit contrôlé en fonction de signaux de sortie du système de contrôle de la pression des pneus (14).

2. Fauteuil roulant selon la revendication 1, **caractérisé en ce que** le système de contrôle de la pression des pneus (14) comprend des modules de capteurs (16, 18, 20, 22) correspondant aux pneus (6, 8, 10, 12), qui sont en liaison par transmission de signaux avec une unité centrale (24) du système de contrôle de la pression des pneus (14) pour la transmission de signaux représentant la pression des pneus respective à l'unité centrale (24).

3. Fauteuil roulant selon la revendication 1 ou 2, **caractérisé en ce que** le système de contrôle de la pression des pneus (14) comprend un dispositif d'affichage (26) ou est relié avec un dispositif d'affichage pour l'affichage de données relatives à la pression des pneus.

4. Fauteuil roulant selon l'une des revendications précédentes, **caractérisé en ce que** le système de contrôle de la pression des pneus (14) comprend un dispositif de génération de signaux (28) ou est en liaison par transmission de données avec un dispositif de génération de signaux, qui est conçu et programmé de façon à ce qu'un signal d'avertissement soit généré lorsqu'une valeur limite de la pression des pneus, réglée ou pouvant être réglée, est atteinte.

5. Fauteuil roulant selon la revendication 3 ou 4, **caractérisé en ce que** le dispositif d'affichage (26) et/ou le dispositif de génération de signaux (28) sont respectivement est constitué d'un terminal de télécommunication mobile qui est en liaison de transmission de données avec l'unité centrale (24) du système de contrôle de la pression des pneus (14).

6. Fauteuil roulant selon l'une des revendications précédentes, **caractérisé en ce qu'**au moins un module de capteur (16, 18, 20, 22) peut être vissé sur une valve d'un pneu (6, 8, 10, 12) correspondant.

7. Fauteuil roulant selon l'une des revendications précédentes, **caractérisé en ce qu'**au moins un module de capteur (16, 18, 20, 22) est en liaison de transmission de signaux sans fil avec l'unité centrale (24) du système de contrôle de la pression des pneus (14).

8. Fauteuil roulant selon l'une des revendications précédentes, **caractérisé en ce que** le fauteuil roulant (2) est conçu comme un fauteuil roulant électrique.
